# EUROPEAN PATENT APPLICATION

(11) **EP 2 407 707 A1**
(43) Date of publication of application: **18.01.2012**
(21) Application number: 09841530.0
(22) Date of filing: 15.12.2009
(51) Int. Cl.: F21S 2/00, F21V 23/00, G02F 1/13357, H04N 5/66, F21Y 103/00

(54) **ILLUMINATION DEVICE, DISPLAY DEVICE, AND TELEVISION DEVICE**

(30) Priority: 13.03.2009 JP 2009061220
(71) Applicant: Sharp Kabushiki Kaisha, Osaka-shi, Osaka 545-8522 (JP)
(72) Inventor: MATSUMOTO, Shinji, Osaka 545-8522 (JP)
(74) Representative: Müller-Boré & Partner Patentanwälte
(86) International application number: PCT/JP2009/070870
(87) International publication number: WO 2010/103705

(57) **Abstract**

A backlight unit 12 of the present invention includes a light source 18, a chassis 14, a power supply board 20, and a relay connector 21. The chassis 14 houses the light source 18. The power supply board 20 is arranged on a side of the chassis 14 opposite from the light source 18. The power supply board 20 is configured to supply drive power to the light source 18. The relay connectors 21 is mounted to the chassis 14 so as to be movable between a non-connected position at which the power supply board 20 is disconnected from the relay connector 21 and a connected position at which the power supply board 20 is connected to the relay connector 21 along a surface of the chassis 14. A proximity restriction boss 30 projects from the power supply board 20 so as to be in contact with the chassis 14 with the power supply board 20 being at the non-connected position or the connected position. The proximity restriction boss 30 restricts proximity of the power supply board 20 to the chassis 14.

## Description

### TECHNICAL FIELD

The present invention relates to a lighting device, a display device and a television receiver.

### BACKGROUND ART

A liquid crystal panel included in a liquid crystal display device such as a liquid crystal television receiver does not emit light. Therefore, a backlight unit is required as a separate lighting unit. The backlight unit is arranged behind the liquid crystal panel (on an opposite side from the display surface). It includes a chassis, a number of lamps (e.g., cold cathode tubes), and an inverter unit. The chassis has an opening in a surface on the liquid crystal panel side. The lamps are housed in the chassis. The inverter unit is configured to supply power to the lamps.

Patent Document 1 discloses an example configuration for making electrical connection between an inverter unit and lamps. In this configuration, the lamps are arranged on the front side inside the chassis and the inverter unit is arranged on the rear side outside the chassis. Lamp sockets are mounted to the chassis so as to penetrate through the chassis. The lamps are connected to inner ends of the lamp sockets. The inverter unit is connected to outer ends of the lamp sockets. Furthermore, the chassis has guide portions on an outer rear side. During mounting of the inverter unit to the chassis, the inverter unit is guided by the guide portions.

Patent Document 1: Japanese Unexamined Patent Publication No. 2008-27880

### Problem to be Solved by the Invention

In a liquid crystal display device in Patent Document 1, the inverter unit is connected to the lamp sockets by holding the inverter unit facing the rear surface of the chassis, horizontally moving it along the guide portions, and connecting it to the lamp sockets. In the liquid crystal display device, the inverter unit is guided in an in-plane direction of the chassis and a direction so as to move away from the chassis; however, not in a direction so as to move closer to the rear surface of the chassis. Usually, various chip components are mounted on a surface on the inverter unit opposite the chassis. If the inverter unit is brought too close to the rear surface of the chassis and in contact therewith, the inverter unit may be damaged.

### DISCLOSURE OF THE PRESENT INVENTION

The present invention was made in view of the foregoing circumstances. An object of the present invention is to reduce damages during mounting an inverter board to a chassis.

### Means for Solving the Problem

A lighting device of the present invention includes a light source, a chassis, a power supply board, at least one relay connector, and at least one proximity restriction boss. The chassis houses the light source. The power supply board is arranged on a chassis side opposite from the light source and configured to supply drive power to the light source. The at least one relay connector is mounted to the chassis such that the power supply board is connected thereto so as to be movable between a non-connected position and a connected position along a surface of the chassis. At the non-connected position, the power supply board is disconnected from the relay connector. At the connected position, the power supply board is connected to the relay connector. The relay connector is configured to relay power supply from the power supply board to the light source. The at least one proximity restriction boss projects from the power supply board so as to be in contact with the chassis with the power supply board being at at least one of the non-connected position and the connected position. The proximity restriction boss is configured to restrict proximity of the power supply board to the chassis.

During the connection of the power supply board to the relay connector, the power supply board is set at the non-connected position on a side away from the light source with respect to the chassis. Then, the power supply board is moved from the non-connected position to the connected position along a board surface of the chassis. The proximity restriction boss that restricts the proximity of the power supply board to the chassis projects from the power supply board. Therefore, the power supply board remains a predetermined distance away from the chassis when it is at the non-connected position or at the connected position. During the setting of the power supply board at the non-connected position or the movement thereof from the non-connected position to the connected position, components mounted on the power supply board are less likely to touch the chassis. Therefore, the power supply board and the chassis are less likely to be damaged.

The proximity restriction boss may include a spherical member attached to a top thereof close to the chassis. The spherical member may be configured to roll.
During the movement of the power supply board from the non-connected position to the connected position, the spherical member of the proximity restriction boss rolls. As a result, the power supply board can be smoothly moved.

The at least one proximity restriction boss may include at least three proximity restriction bosses that project from the power supply board.
With this configuration, the power supply board is held at at least three points so as to be away from the chassis. During the movement of the power supply board, the power supply board can be stably moved. The power supply board is less likely to touch the chassis. Therefore, the power supply board and the chassis are less likely to be damaged.

The power supply board may have a rectangular plan-view shape, and the at least one proximity restriction boss may include four proximity restriction bosses that project from respective corners of the power supply board.
When the power supply board is formed substantially in a rectangular shape, four corners thereof are most likely to touch the chassis. By providing the proximity restriction bosses at the corners, the power supply board is further less likely to touch the chassis.

The proximity restriction boss can be used for releasing electrical discharge from an electrode supply board.
Because various electronic components are mounted on the power supply board, unexpected free discharges from those components to peripheral components may occur. By releasing the electrical discharges via the proximity restriction boss, such unexpected free discharges can be reduced.

The chassis faces the power supply board without another member therebetween.
When no member is provided between the power supply board and the chassis, the power supply board is more likely to touch the chassis. As a result, the power supply board and the chassis are more likely to be damaged. Therefore, the proximity restriction boss of this invention can contribute to reducing the damages.

The lighting device further includes a cover having an insulation property between the chassis and the power supply board.
With this configuration, an unexpected free-discharge from the power supply board to the chassis is less likely to occur.

Next, to solve the problem mentioned earlier, a display device of the present invention includes the above lighting device and a display panel configured to provide display using light from the lighting device.
Because the lighting device that is configured to supply light to the display panel is less likely to be damaged during the mounting, the display device can be manufactured at low cost and provided with high operation reliability.

An example of the display panel is a liquid crystal panel. Such a display device can be used as a liquid crystal display device in various applications including television receivers and personal computer displays. Such a display device is especially preferable in large-screen applications.

A television receiver of the present invention includes the above display device.
Such a television receiver can be manufactured at low cost and provided with high operation reliability.

### Advantageous Effect of the Invention

According to the present invention, damages during the mounting of the inverter board to the chassis can be reduced.

### BRIEF DESCRIPTION OF THE DRAWINGS

FIG. 1 is an exploded perspective view of a television receiver according to the first embodiment of the present invention;
FIG. 2 is a cross-sectional view of a liquid crystal display device along a long-side direction;
FIG. 3 is a plan view of a chassis with cold cathode tubes housed therein;
FIG. 4 is a cross-sectional view along the long-side direction of the liquid crystal display device with an inverter board at a removal position;
FIG. 5 is a cross-sectional view of relay connectors;
FIG. 6 is a bottom view of the chassis with the inverter board mounted thereto;
FIG. 7 is a plan view illustrating a general configuration of the inverter board;
FIG. 8 is a cross-sectional view illustrating a configuration of a guide boss of the inverter board;
FIG. 9 is a magnified partial bottom view with the inverter board at a non-connected position;
FIG. 10 is a cross-sectional view along line A-A in FIG. 9 with the inverter board at the non-connected position;
FIG. 11 is a magnified partial bottom view with the inverter board at the connected position;
FIG. 12 is a cross-sectional view along line B-B in FIG. 10 with the inverter board at the connected position;
FIG. 13 is a cross-sectional view along line C-C in FIG. 10 with the inverter board at the connected position;
FIG. 14 is a cross-sectional view of a liquid crystal display device along a long-side direction according to the second embodiment of the present invention;
FIG. 15 is a plan view illustrating a general configuration of the inverter board according to the third embodiment of the present invention;
FIG. 16 is a cross-sectional view of a liquid crystal display device along a long-side direction according to the fourth embodiment of the present invention; and
FIG. 17 is a magnified bottom view of the chassis with covers mounted thereto.

### BEST MODE FOR CARRYING OUT THE INVENTION

### <First embodiment>

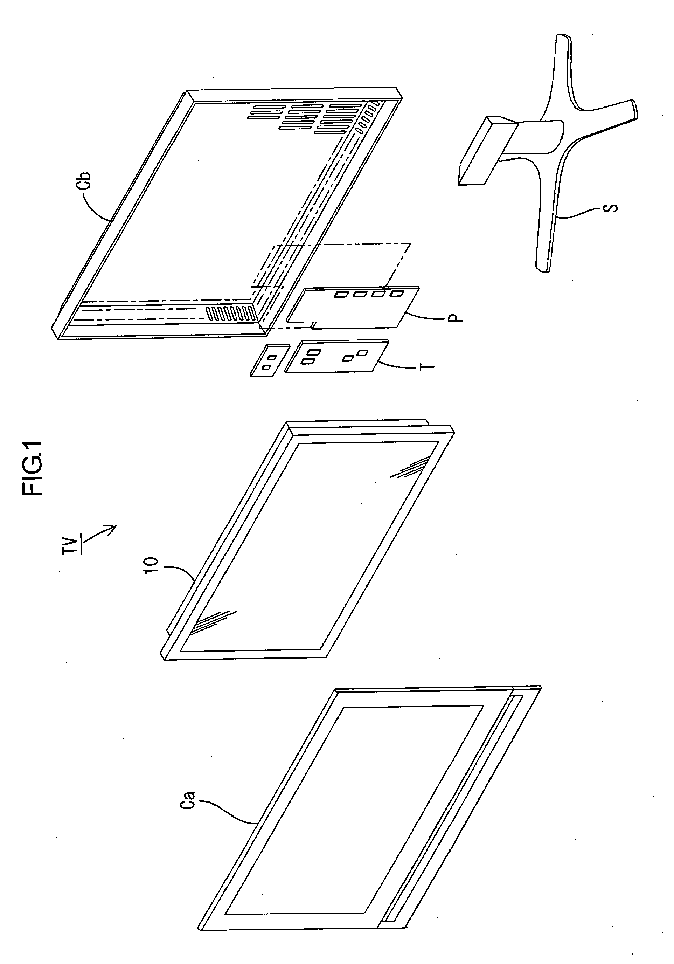

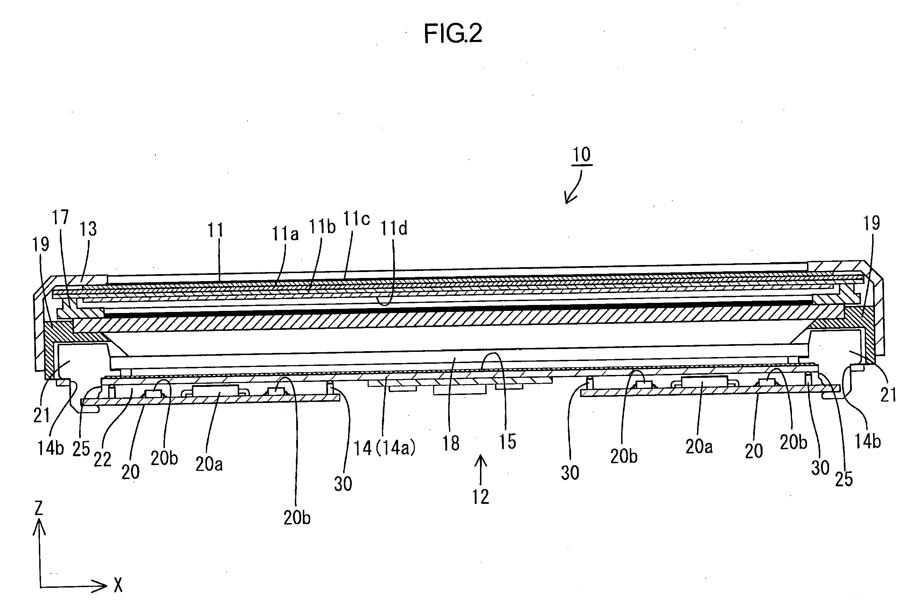

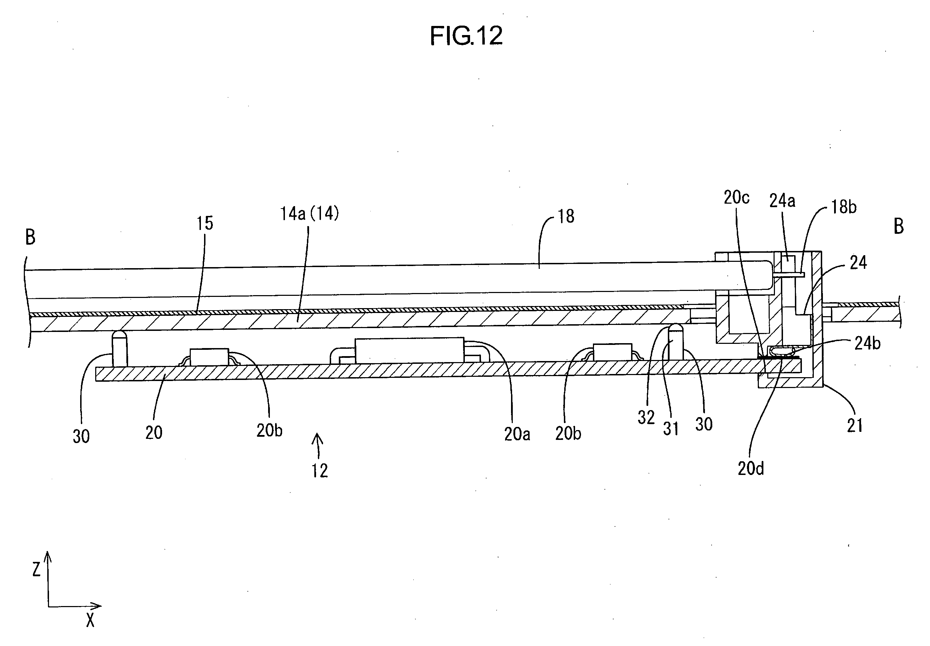

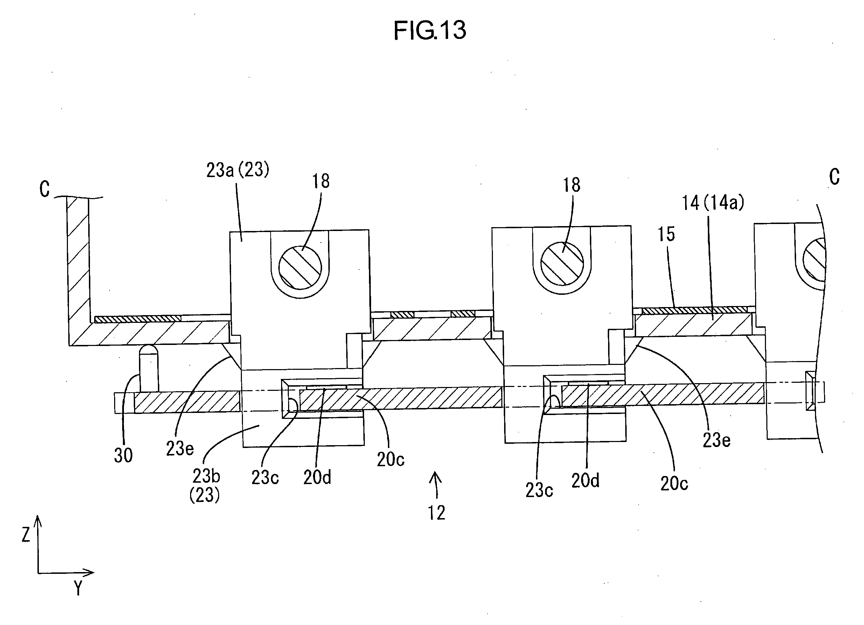

The first embodiment of the present invention will be explained with reference to FIGS. 1 to 13. In this embodiment, a liquid crystal display device 10 will be explained.
X-axes, Y-axes and Z-axes are present in some drawings to indicate orientations of the liquid crystal display device 10. In FIG. 2, the upper side and the lower side correspond to the front side (the front-surface side, the light exit side) and the rear side (the rear-surface side, an opposite side from the light exit side), respectively.

As illustrated in FIG. 1, the television receiver TV includes the liquid crystal display device 10 (a display device), a front cabinet Ca, a rear cabinet Cb, a power source P, and a tuner T. The cabinets Ca and Cb sandwich the liquid crystal display device 10 therebetween. The liquid crystal display device 10 is housed in the cabinets Ca and Cb. The liquid crystal display device 10 has a landscape rectangular overall shape. As illustrated in FIG. 2, the liquid crystal display device 10 includes a liquid crystal panel 11, which is a display panel 11, and a backlight unit 12 (a lighting device), which is an external light source. The liquid crystal panel 11 and the backlight unit 12 are held together by a frame-shaped bezel 13.

Next, the liquid crystal panel 11 and the backlight unit 12 included in the liquid crystal display device 10 will be explained. The display panel 11 has a rectangular plan-view shape. As illustrated in FIG. 2, it includes a pair of glass substrates 11a and 11b bonded together with a predetermined gap therebetween and a liquid crystal layer (not shown) sealed between the glass substrates 11a and 11b. On the glass substrate 11a, switching components (e.g., TFTs), pixel electrodes and an alignment film are arranged. The switching components are connected to source lines and gate lines that are perpendicular to each other. The pixel electrodes are connected to the switching components. On the other glass substrate 11b, color filter having color sections of red (R), green (G) and blue (B) arranged in a predetermined matrix, counter electrodes and an alignment film are arranged. Image data and various kinds of control signals for displaying images are feed from a drive circuit board, which is not shown, to the source lines, the gate lines and the counter electrode. Polarizing plates 11c and 11d are arranged on outer surfaces of the glass substrates 11a and 11b, respectively.

As illustrated in FIG. 2, the backlight unit 12 is a so-called direct backlight including light sources that are arranged directly behind the liquid crystal panel 11. The backlight unit 12 includes a chassis 14, a reflection sheet 15, an optical member 16, a frame 17, a plurality of cold cathode tubes 18 (light sources), and holders 19. The chassis 14 has a box-like overall shape and an opening on the front side (the light exit side, the liquid crystal panel 11 side). The reflection sheet 15 is placed inside the chassis 14. The optical member 16 includes a plurality of pieces. It is arranged so as to cover the opening. The frame 17 holds the optical member 16. The cold cathode tubes 18 are arranged parallel to each other and housed in the chassis 14. The holders 19 cover the respective ends of the cold cathode tubes 18 so as to block light. Each holder 19 has light reflectivity. The backlight unit 12 further includes inverter boards 20 (power supply boards), and relay connectors 21. The inverter bards 20 are arranged on the rear of the chassis 14. The relay connectors 21 are provided for relaying power supply from the inverter boards 20 to the cold cathode tubes 18.

The chassis 14 is made of metal, for instance, aluminum. The chassis 14 includes a bottom plate 14a having a rectangular plan-view shape similar to the liquid crystal panel 11. The long-side direction and the short-side direction of the bottom plate 14a match the X-axis direction and the Y-axis direction indicated in the drawings, respectively. The bottom plate 14a has connector insertion holes 14b in end areas of the long dimension thereof. The connector insertion holes 14b are through holes through which the relay connectors 21 are passed. A plurality of them (the number required for the cold cathode tubes 18 and the relay connectors 21) are arranged along the Y-axis direction (the short sides of the bottom plate 14a) so as to be parallel to each other. The reflection sheet 15 is made of white synthetic resin having high light reflectivity. It is placed over the inner surface of the chassis 14 so as to cover substantially an entire area and configured to reflect rays of light from the cold cathode tubes 18 toward the optical members 16 (the light exit side). The reflection sheet 15 has holes continue into the connector insertion holes 14b.

Each optical member 16 has a rectangular shape similar to the bottom plate 14a of the chassis 14 or the liquid crystal panel 11. The optical members 16 are arranged between the cold cathode tubes 18 on the rear-surface side and the liquid crystal panel 11 on the front-surface side. The optical members 16 include a diffuser plate, a diffuser sheet, a lens sheet and a brightness enhancement sheet arranged in this order from the rear side. They are configured to convert light emitted from each cold cathode tube, which is a linear light source, into planar light.

The frame 17 is formed in a frame shape along the outer edges of the liquid crystal panel 11 and the optical members 16. The frame 17 is arranged in front of the optical members 16. The outer edges of the optical members 16 are sandwiched between the frame 17 and the holders 19. The frame 17 supports the liquid crystal panel 11 from the rear side. The liquid crystal panel 11 is sandwiched between the frame 17 and the bezel 13 that is arranged in front of the liquid crystal panel 11.

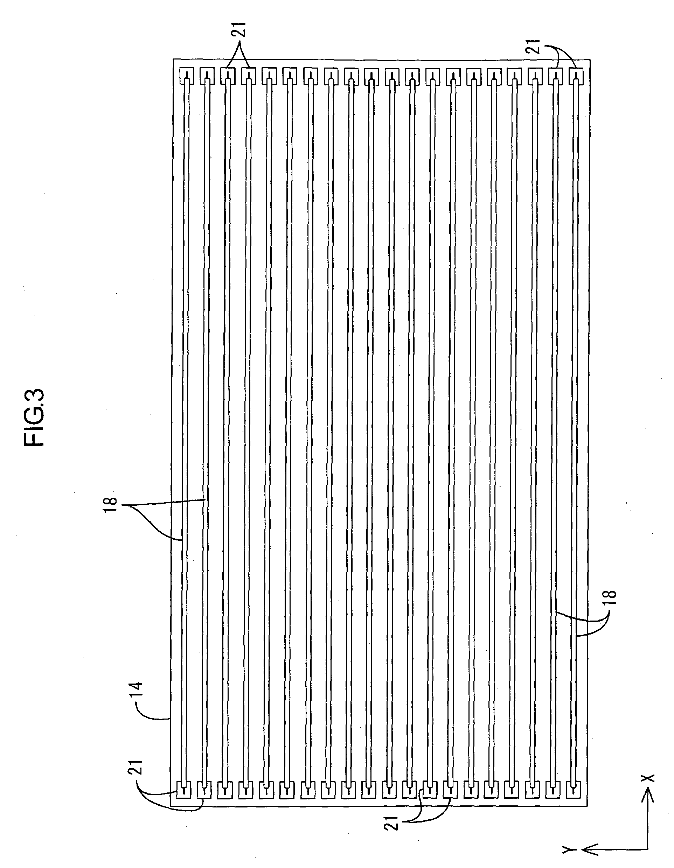

The cold cathode tubes 18 are one kind of linear light sources (tubular light sources). As illustrated in FIG. 3, the cold cathode tubes 18 are mounted inside the chassis 14 with the axial direction thereof (the X-axis direction) aligned with the long-side direction of the chassis 14. They are arranged such that the axes thereof are substantially parallel to each other and a predetermined distance away from each other in the short side direction of the chassis 14 (the Y-axis direction).

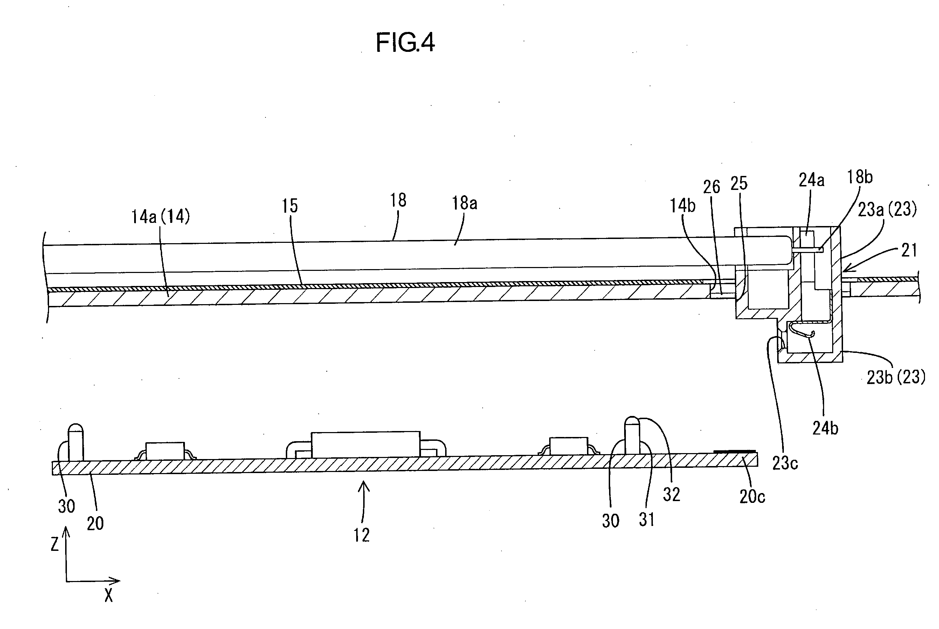

The cold cathode tubes 18 are one kind of discharge tubes. As illustrated in FIG. 4, each cold cathode tube 18 includes an elongated glass tube 18a, a pair of electrodes (not shown), and a pair of outer leads 18b. The glass tube 18a has a circular cross section and closed ends. The electrodes are enclosed in the glass tube 18a and located at the respective ends of the glass tube 18a. The outer leads 18b project from the respective ends of the glass tube 18a to the outside. Mercury that is a luminescent material is sealed in the glass tube 18a and a fluorescent material is applied to the inner walls of the glass tube 18a (neither the luminescent material nor the fluorescent material are shown). Each outer lead 18b is made of metal having electrical conductivity and formed in an elongated round post-like shape. It projects outward (in an opposite direction to the electrode) from the end of the glass tube 18a and extends along the axial direction (the X-axis direction). The internal end of the outer lead 18b is connected to the electrode inside the glass tube 18a and thus the outer lead 18b and the electrode are at the same potential.

Each holder 19 is made of white synthetic resin having high light reflectivity. As illustrated in FIG. 2, it extends along the short side of the chassis 14 and has a box-like shape with an opening on the rear side. The holders 19 are attached to the respective ends of the long side of the chassis 14 so as to collectively cover the respective ends of the cold cathode tubes 18 (non-light-emitting portions) arranged at the ends in a parallel layout.

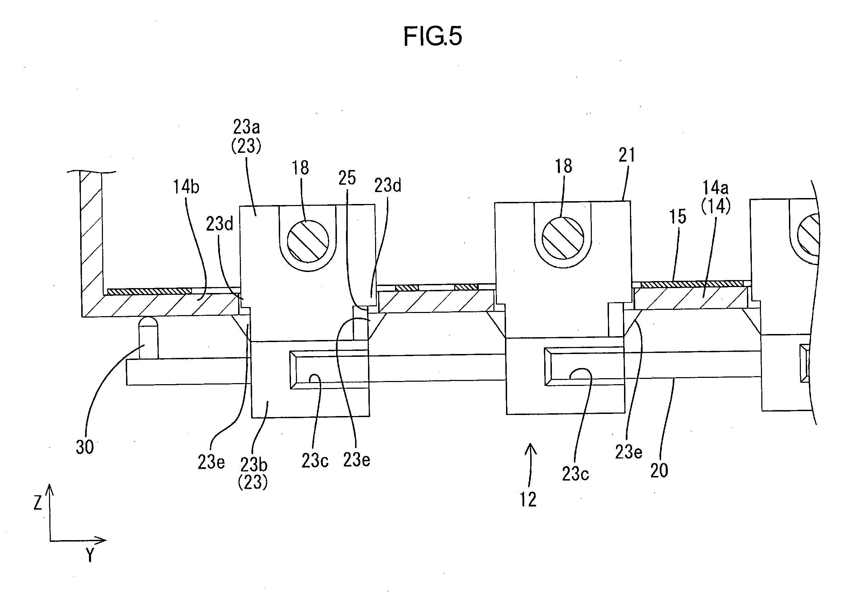

As illustrated in FIG. 4, each relay connector 21 includes a housing 23 and the terminal 24. The housing 23 is made of synthetic resin having insulation properties (e.g., polybutylene terephthalate or nylon) and an overall shape thereof is a block-like shape. The terminal 24 is housed in the housing 23. Each relay connector 21 is passed through the bottom plate 14a of the chassis 14, and mounted. As illustrated in FIG. 5, a part of the housing 23 inside the chassis 14 is a light source holding portion 23a that holds the end of the cold cathode tube 18. A part of the housing 23 outside the chassis 14 is a board holding portion 23b that holds the connector connecting portion 20c of the inverter board 20. The light source holding portion 23a has a round groove corresponding to a shape of the end of the cold cathode tube 18. The board holding portion 23b has the board holding hole 23c that extends along the X-axis direction and the Y-axis direction. The board holding hole 23c opens to the rear (toward the inverter board 20) and to the right in FIG. 5. The housing 23 is directly held by the chassis 14. Specifically, the light source holding portion 23a has a larger Y-axis dimension than that of the board holding portion 23b, and a wide portion 23d is held against the chassis 14 from the front. The board holding portion 23b includes stoppers 23e that are held against the cover 22 from the rear.

As illustrated in FIG. 4, ends of the terminals 24 in the light source holding portions 23a are light source contact portions 24a that are in contact with the outer leads 18b of the cold cathode tubes 18. Ends of the terminals 24 in the board holding portions 23b are board contact portions 24b that are in contact with the terminals 20d of the connector connecting portions 20c. Each light source contact portion 24a and each board contact portion 24b have resilience and thus are elastically in contact with the outer lead 18b and the terminal 20d, respectively. An output voltage of the inverter board 20 is applied to the outer leads 18b and the electrodes of the cold cathode tubes 18 via the relay connectors 21.

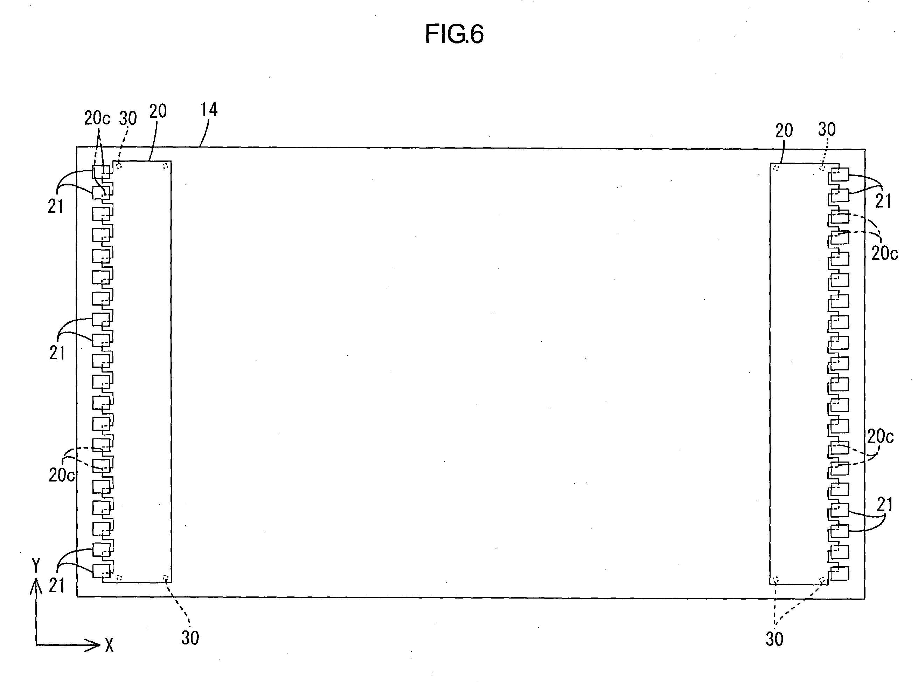

The relay connectors 21 are arranged in parts of the chassis 14 corresponding to the ends of the cold cathode tubes 18. Namely, they are arranged ends of the long dimension of the bottom plate 14a in pairs. Moreover, a plurality of them (corresponding to the number of the cold cathode tubes 18) are arranged along the short sides of the bottom plate 14a (along the Y-axis direction, an arrangement direction in which the cold cathode tubes 18 are arranged parallel to each other) (see FIG. 6). Arrangement intervals of the relay connectors 21 are substantially equal to arrangement intervals of the cold cathode tubes 18. The Y-axis positions of the relay connectors 21 are substantially aligned with those of the cold cathode tubes 18.

Next, the inverter boards 20 will be explained with reference to FIGS. 2, and 6 to 13.

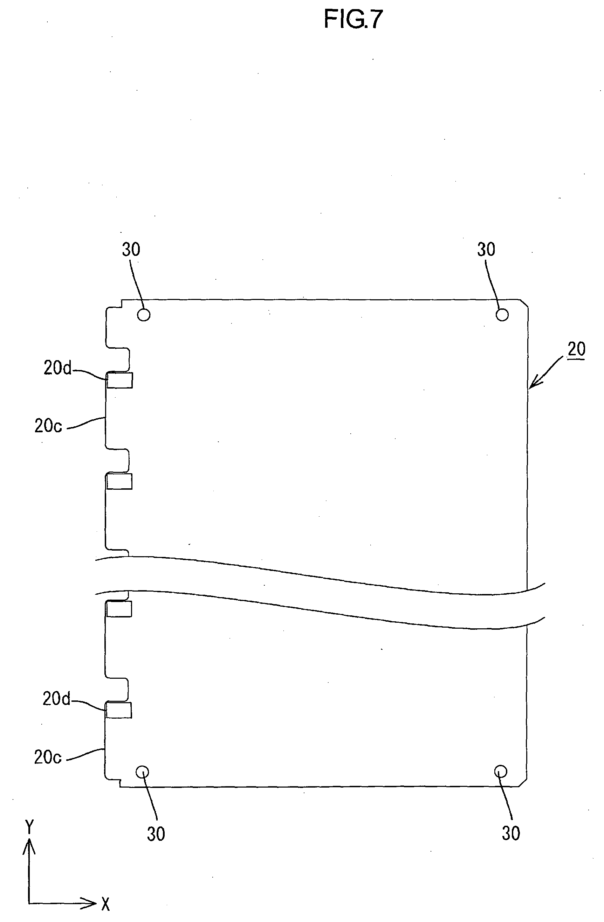

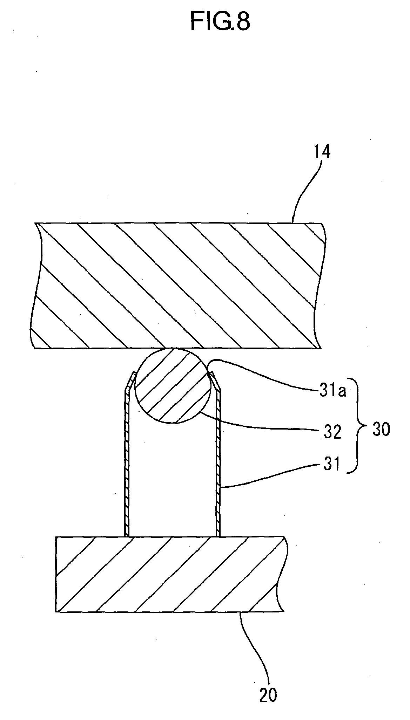

FIG. 6 is a bottom view of the chassis with the inverter board mounted thereto. FIG. 7 is a plan view illustrating a general configuration of the inverter board. FIG. 8 is a cross-sectional view illustrating a configuration of a guide boss of the inverter board.
Each inverter board 20 includes a base plate made of synthetic resin (e. g. , a glass fabric epoxy resin or a paper phenol) on which wiring patterns are formed and various electronic components are mounted. Specifically, wiring patterns (not shown) are formed on the front surface (the surface close to the chassis 14). Moreover, lead components 20a and chip components 20b are mounted on the front surface as illustrated in FIG. 2. The lead components 20a include power transformers and capacitors. The chip components include resistors, diodes, and capacitors. Lead of the lead components 20a are soldered to the wiring patterns. The chip components 20b are surface-mounted on the wiring patterns on the front surface of the inverter board 20. The inverter board 20 is connected to the power source P of the liquid crystal display device 10. It is configured to step up an input voltage from the power source P and to output a voltage higher than the input voltage. The output voltage is applied to each cold cathode tube 18. The inverter board 20 controls on-and-off of the cold cathode tubes 18. In FIGS 6 and 7, the lead components 20a and the chip components 20b are not shown.

As illustrated in FIG. 6, the inverter boards 20 are mounted on the rear surface of the bottom plate 14a of the chassis 14 (the surface away from the cold cathode tubes 18) on opposite sides with no other members therebetween. The inverter boards 20 are arranged at the respective ends of the long dimension of the bottom plate 14a so as to be symmetric. Each inverter board 20 has a rectangular plan-view shape. The inverter board 20 is placed with the board surface thereof substantially parallel to the board surface of the bottom plate 14a of the chassis 14 (the surface on the X-Y plane and perpendicular to the Z-axis that corresponds to the thickness direction of the liquid crystal display device 10) and with the long-side direction thereof aligned with the short-side direction of the bottom plate 14a (the Y-axis direction, a direction perpendicular to the axial direction of the cold cathode tube 18). The inverter boards 20 are fixed to the bottom plate 14 with screws.

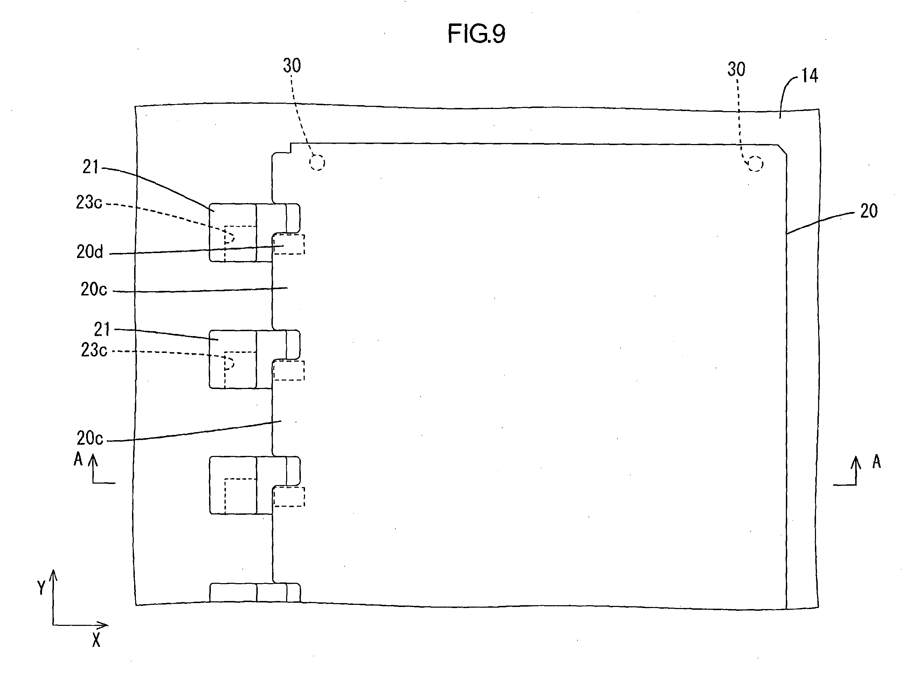

Each inverter board 20 has connector connecting portions 20c at a front end with respect to the connecting direction of the inverter board 20 to the relay connector 21. The connector connecting portions 20c are inserted in the relay connectors 21 and connected thereto. A plurality of the connector connecting portions 20c are provided along the long side of the inverter board 20 (one for each relay connector 21) by cutting out some parts of the front end of the inverter board 20. Namely, the front end of the inverter board 20 is formed in a comb-like shape. As illustrated in FIG. 9, each connector connecting portion 20c is inserted in the corresponding relay connector 21. Terminals 20d extending from the wiring pattern are provided at distal ends of the respective connector connecting portion 20c. A width of each connector connecting portion 20c is larger than that of an opening of a board holding hole 23c of each relay connector 21. A difference between them is substantially equal to a distance between the adjacent relay connectors 21.

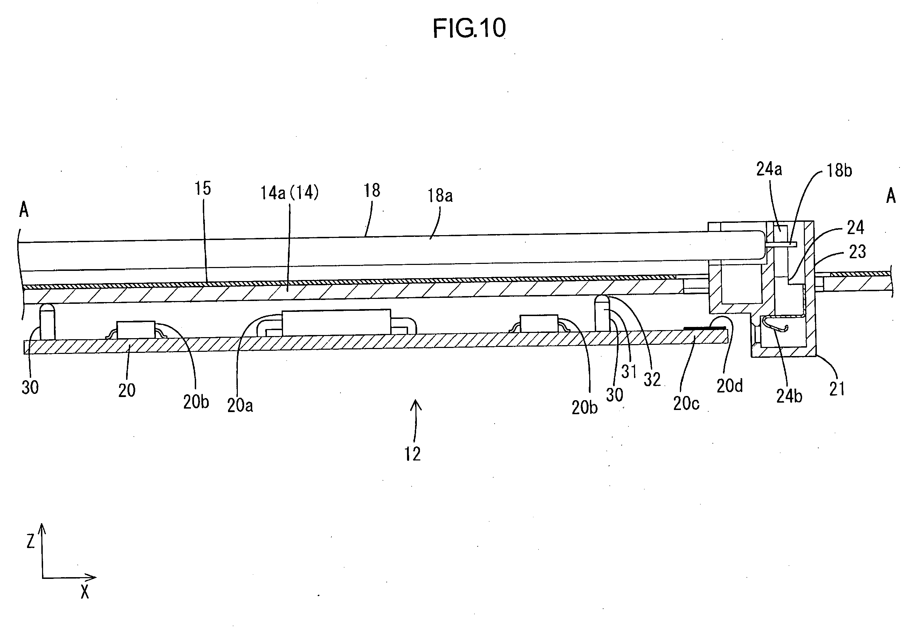

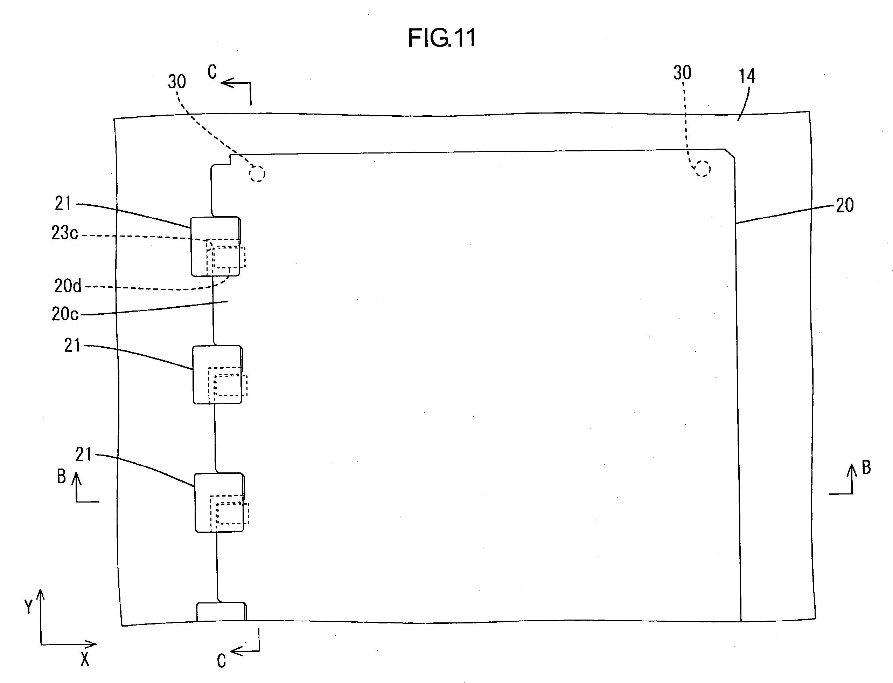

The inverter board 20 can be moved between a non-connected position (see FIGS. 9 and 10) and a connected position (see FIGS. 11 to 13) in the X-axis direction (a short-side direction of the inverter board 20) along the board surface of the inverter board 20. At the non-connected position, the connector connecting portions 20c are removed from the relay connectors 21 and the inverter board 20 is held a predetermined distance away from the bottom plate 14a of the chassis 14 so as to face the bottom plate 14a. At the connected position, the connector connecting portions 20c are inserted in the relay connectors 21 and the inverter board 20 is held a similar distance (a similar Z-axis position) to the non-connected position away from the bottom plate 14a. As illustrated in FIGS. 9 and 10, the connector connecting portions 20c are positioned a predetermined distance from the relay connectors 21 in the X-axis direction and not in contact with terminals 24 of the relay connectors 21 at the non-connected position. As illustrated in FIGS. 11 to 13, the connector connecting portions 20c are inserted in the relay connectors 21 and the terminals 20d are in contact with the terminals 24 of the relay connectors 21 at the connected position. The inverter board 20 can be moved between the non-connected position and the connected position in a substantially horizontal direction along the X-axis direction. A direction from the non-connected position to the connected position is referred to as a connecting direction, and a direction from the connected position to the non-connected position is referred to as a disconnecting direction. A direction toward the right in the X-axis direction in FIGS. 6, 7, and 9 to 12 corresponds to the connecting direction, and a direction toward the left in the X-axis direction in those drawings corresponds to the disconnecting direction. In the following descriptions about the connecting direction and the disconnecting direction of each inverter board 20 to or from the relay connectors 21, the left inverter board 20 and the left relay connectors 21 in FIG. 4 are referred. About the front and the rear, the right side and the left side in the X-axis direction in FIGS. 6, 7, and 9 to 12 are referred to as the front and the rear, respectively.

As described, the inverter board 20 is connected to the relay connectors 21 by moving it from the non-connected position to the connected position with the predetermined Z-axis position thereof relative to the chassis 14 maintained. The lead components 20a and the chip components 20b are mounted on the surface of the inverter board 20 opposite the chassis 14. During the setting of the inverter board 20 at the non-connected position relative to the chassis 14, the lead components 20a and the chip components 20b may touch the chassis 14.

In this embodiment, four guide bosses (proximity restriction bosses) 30 are provided at the respective corners of the inverter board 20 so as to project from the front surface thereof (the surface close to the chassis 14). The guide bosses 30 are soldered to the (ground) wirings on the inverter board 20. Each guide boss 30 is made of metal. As illustrated in FIG. 8, each guide boss 30 includes a tubular portion 31 and a ball (a spherical member) 32. The tubular portion 31 is formed substantially in a tubular shape. The ball 32 is held at a top of the tubular portion 31 and held such that it can roll. Specifically, the tubular portion 31 has an opening 31a at the top thereof close to the chassis 14. About a half of the ball 32 projects from the tubular portion 31 through the opening 31a. When a frictional resistance is applied to the projecting part of the ball 32, the ball 32 rolls.

The guide bosses 30 are in contact with the chassis 14 when the inverter board 20 is at the connected position or the non-connected position. Because the chassis 14 and the guide bosses 30 are made of metal, electrical charges in the inverter board 20 are released to the chassis 14 via the guide bosses 30.

This embodiment has the above configurations. Next, functions of this embodiment will be explained. In the manufacturing of the liquid crystal display device 10 having the above configurations, the liquid crystal panel 11 and the backlight unit 12 are fitted together by the bezel 13. Next, steps for assembly of the backlight unit 12 will be explained.

In the assembly of the backlight unit 12, the reflection sheet 15 is placed over the front inner surface of the chassis 14. The relay connectors 21 are mounted to the chassis 14 from the inner side of the chassis 14. The relay connectors 21 are held to the chassis 14. Then, the cold cathode tubes 18 are installed in the chassis 14. The outer leads 18b at the ends thereof are inserted in the light source holding portions 23a of the relay connectors 21 so as to elastically in contact with the light source contacts 24a of the terminals 24. The holders 19, the optical members 16 and the frame 17 are mounted to the chassis 14 from the front (see FIG. 2).

On the rear surface of the chassis 14, the inverter boards 20 are mounted to the chassis 14. The inverter boards 20 are moved close to the chassis 14 from the removed positions illustrated in FIGS. 4 with the surfaces on which the lead components 20a and the chip components 20b are provided on the front side. The inverter boards 20 are moved from the rear side toward the chassis 14 along the Z-axis direction until they are set to the non-connected positions illustrated in FIGS. 9 and 10. The balls 32 of the guide bosses 30 that project from the inverter boards 20 are in contact with the rear surface of the chassis 14. As a result, the inverter boards 20 remain the predetermined distance (corresponding to the height of the guide bosses 30) away from the chassis 14.

Next, each inverter board 20 is moved from the non-connected position to the connected position. When the inverter board 20 is moved from the non-connected position and pushed to the front along the X-axis direction, frictional resistances are produced between the balls 32 of the guide posses 30 and the bottom plate 14a of the chassis 14. As a result, the inverter boards 20 move while the balls 32 roll on the rear surface. The terminals 20d are smoothly inserted in the respective board holding holes 23c of the relay connectors 21. When each inverter board 20 is set to the connected position, the connector connecting portions 24b of the terminals 24 of the relay connectors 21 are elastically in contact with the terminals 20d of the respective connecting portions 20c as illustrated in FIGS. 11 to 13. The inverter board 20 is electrically connected to the cold cathode tubes 18 via the relay connectors 21 and power supply to the cold cathode tubes 18 is established.

As described above, the backlight unit 12 in this embodiment includes the cold cathode tubes 18, the chassis 14, the inverter boards 20, and the relay connectors 21. The chassis 14 houses the cold cathode tubes 18. The inverter boards 20 are arranged on the opposite side of the chassis 14 from the cold cathode tubes 18 and configured to supply drive power to the cold cathode tubes 18. The relay connectors 21 are mounted to the chassis 14 and configured to relay power supply from the inverter boards 20 to the cold cathode tubes 18. Each inverter board 20 can be moved from the non-connected position and the connected position along the board surface of the inverter board 20. The inverter board 20 is disconnected from the relay connectors at the non-connected position and connected to the relay connectors 21 at the connected position. Furthermore, the guide bosses 30 project from each inverter board 20. The guide bosses 30 are in contact with the chassis 14 when the inverter board 20 is at the non-connected position or the connected position and thus proximity between the inverter board 20 and the chassis 14 can be restricted.

During the connection of each inverter board 20 to the relay connectors 21, the inverter board 20 is set at the non-connected position on the opposite side of the chassis 14 from the cold cathode tubes 18. Then, the inverter board 20 is moved from the non-connected position to the connected position along the board surface of the chassis 14. The guide bosses 30 that restrict the proximity of the inverter board 20 to the chassis 14 project from the inverter board 20. Therefore, the inverter board 20 remains the predetermined distance away from the chassis 14 when it is at the non-connected position or the connected position. During the setting of the inverter board 20 at the non-connected position or the movement thereof from the non-connected position to the connected position, the components 20a and 20b mounted on the inverter board 20 are less likely to touch the chassis 14. Therefore, the inverter board 20 and the chassis 14 are less likely to be damaged.

In this embodiment, the ball 32 that can roll is attached to the top of each guide boss 30 close to the chassis 14.
When each inverter board 20 is moved from the non-connected position to the connected position, the balls 32 of the guide bosses 30 roll and thus the inverter board 20 can be smoothly moved.

Three or more guide bosses 30 project from each inverter board 20. The inverter board 20 is held at points, at least three points, so as to be the predetermined distance away from the chassis 14. Therefore, the inverter board 20 can be stably moved during the movement thereof. As a result, the inverter board 20 is less likely to touch the chassis 14. This reduced damages to the inverter board 20 and the chassis 14.

Each inverter board 20 is formed substantially in a rectangular shape and the guide bosses 30 project from the respective corners of the inverter board 20. Because the guide bossed 30 project from the corners that are more likely to touch the chassis 14, the inverter board 20 is further less likely to touch the chassis 14.

Electrical charges in each inverter board 20 can be released via the guide bosses 30.
Because the lead components 20a and the chip components 20b are mounted on each inverter board 20, unexpected free discharges from those components to peripheral components may occur. By releasing the electrical discharges via the guide bosses 30, such unexpected free discharges can be reduced.

The chassis 14 and the inverter boards 20 face each other without other members therebetween. When no members are arranged between the chassis 14 and the inverter board 20, the inverter boards 20 are more likely to touch the chassis 14. As a result, the inverter boards 20 and the chassis 14 more likely to be damaged. Therefore, the guide bosses 30 of this invention can contribute to reducing the damages.

### <Second embodiment>

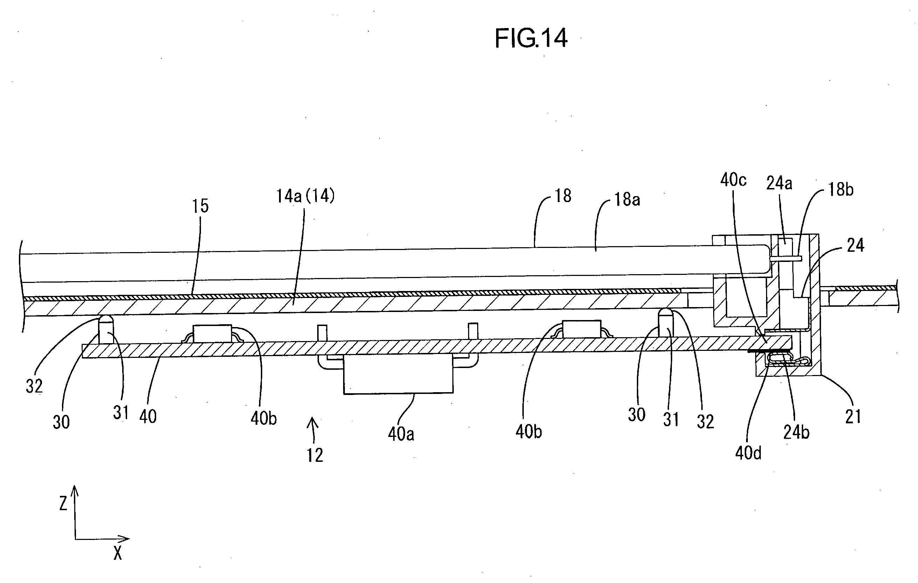

The second embodiment of the present invention will be explained with reference to FIG. 14. In this embodiment, different inverter boards 40 from those in the first embodiment are used. In this embodiment, similar parts to those in the first embodiment will be indicated by the same symbols and will not be illustrated or explained.
FIG. 14 is a cross-sectional view of a liquid crystal display device along a long-side direction according to this embodiment.

As illustrated in FIG. 14, lead components 40a including transformers and capacitors are mounted on the rear surfaces of the inverter boards 40 (the surfaces away from the chassis 14). On the front surfaces of the inverter boards 40 (the surfaces close to the chassis 14), wiring patterns are formed (not shown), and chip components 40b including resistors, diodes, and capacitors are mounted. Leads of the lead components 40a are passed through holes of the inverter boards 40 so as to project from the front surfaces of the inverter boards 40 and soldered to the wiring patterns. The chip components 40b are surface-mounted on the front surfaces of the inverter boards 40.

A front end of each inverter board 40 with respect to a connecting direction of thereof to the relay connectors 21 includes connector connecting potions 40c. The connector connecting portions 40 are inserted in the respective relay connectors 21 and connected thereto. Each connector connecting portion 40c connected to the corresponding relay connector 21 has a terminal 40d on the rear surface (away from the chassis) of the front surface thereof. The terminal 40d extends from the wiring pattern.

Each inverter board 40 faces the bottom plate 14a of the chassis 14. The inverter board 40 can be moved from the non-connected position to the connected position along the bottom plate 14a. Four guide bosses 30 that restrict proximity of the inverter board 40 to the chassis 14 project from the respective corners of the inverter board 40. More specifically, the balls 32 attached to the tops of the guide bosses 30 are in contact with the rear surface of the chassis 14 and thus the inverter board 40 remains the predetermined distance away from the chassis 14.

As described above, the chip components 40b are mounted on the front surfaces of the inverter boards 40 (the surfaces close to the chassis 14). The lead components 40a and the terminals 40d are mounted on the rear surfaces of the inverter boards 40 (the surfaces away from the chassis 14). By mounting the components on both surfaces of the inverter board 40, large mounting areas in which the components are mounted can be provided, that is, the components can be more flexibly arranged. The areas of the inverter board 40 can be reduced. By provided the guide bosses 30 on the inverter board 40, the chip components 40b mounted on the front surface of the inverter board 40 are less likely to touch the chassis 14. This reduces damages to the inverter board 40.

### <Third embodiment>

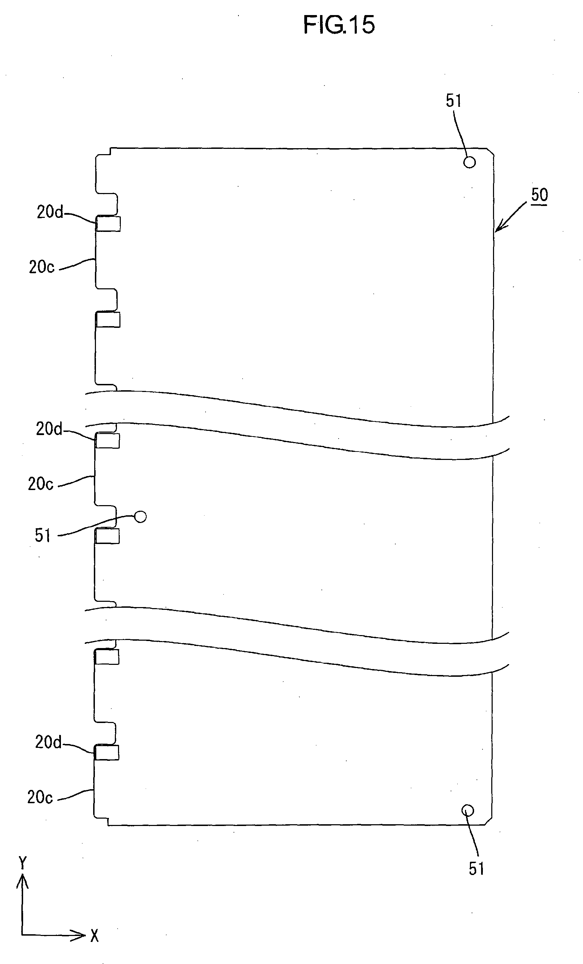

The third embodiment of the present invention will be explained with reference to FIG. 15. In this embodiment, different guide bosses 51 from those in the first embodiment are used. In this embodiment, similar parts to those in the first embodiment will be indicated by the same symbols and will not be illustrated or explained.
FIG. 15 is a plan view illustrating a general configuration of the inverter board according to this embodiment.

As illustrated in FIG. 15, a guide boss 51 projects from a middle portion of each inverter board 50 with respect to the long-side direction (the Y-axis direction) of the inverter board 50 and close to connecting portions of the inverter board 50 to the relay connectors 21 (on the front side). Two guide bosses 51 project from the respective corners of the inverter board 50 on a side away from the connecting portions of the inverter board 50 to the relay connectors 21 (on the rear side). Namely, three guide bosses 51 are arranged at three different positions that form a triangle on the inverter board 50. The guide bosses 51 are in contact with the rear surface of the chassis 14 when the inverter board 50 is at the non-connected position or the connected position.

With at least three guide bosses 51, the inverter board 50 held at least three positions so as to be away from the chassis 14. During the movement of the inverter board 50, the inverter board 50 is less likely to be displaced toward the chassis 14 (in the Z-axis direction) and stably moved. As a result, the inverter board 50 is less likely to touch the chassis 14. This reduces damages to the inverter board 50 and the chassis 14.

### <Fourth embodiment>

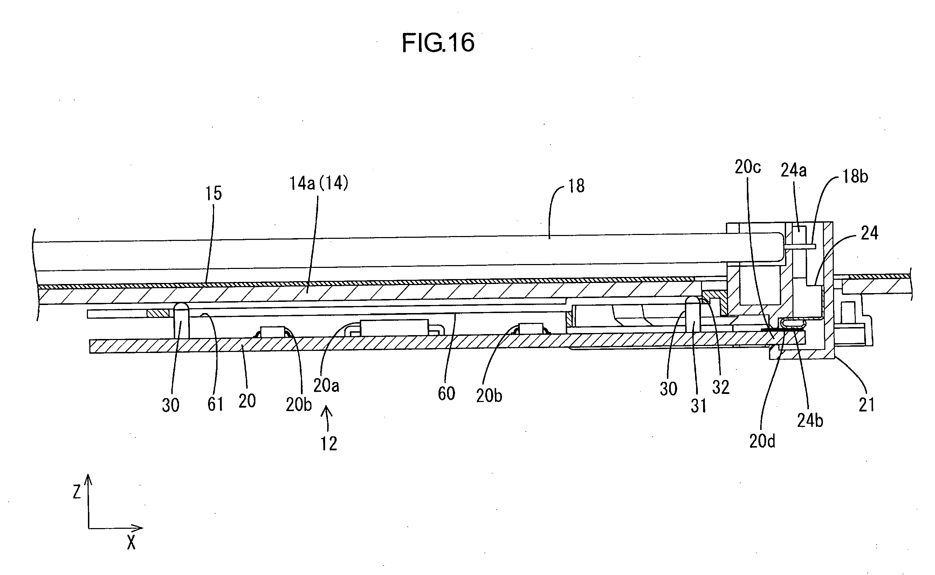

The fourth embodiment of the present invention will be explained with reference to FIG. 16. In this embodiment, covers 60 are attached to the lighting device of the first embodiment. In this embodiment, similar parts to those in the first embodiment will be indicated by the same symbols and will not be illustrated or explained.

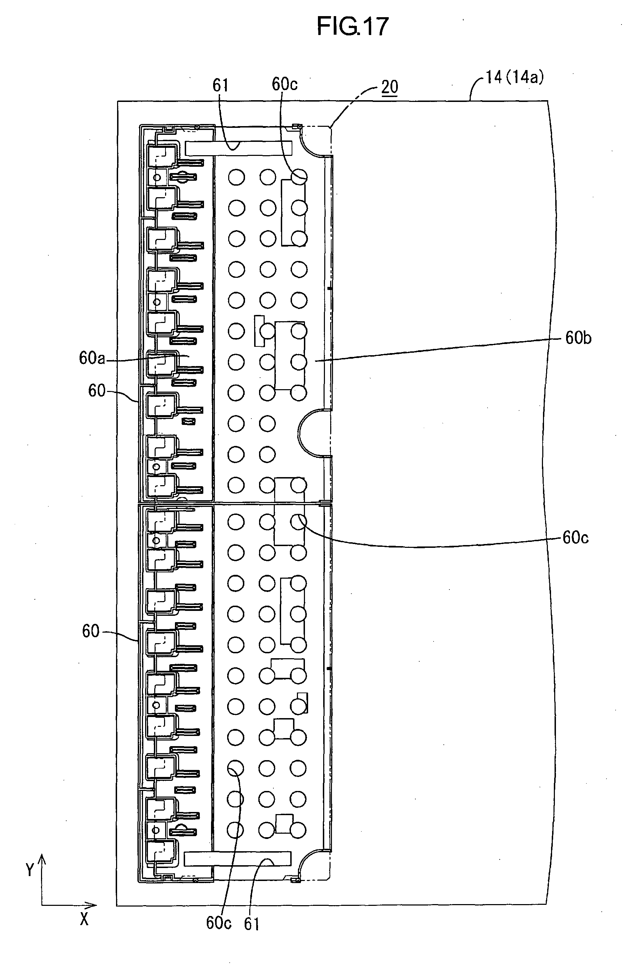

FIG. 16 is a cross-sectional view of a liquid crystal display device along a long-side direction according to this embodiment. FIG. 17 is a magnified bottom view of the chassis with covers mounted thereto.

Each cover 60 is made of synthetic resin having insulation properties. As illustrated in FIG. 16, the cover 60 is placed between the bottom plate 14a of the chassis 14 and the inverter board 20. The covers 60 are mounted to the rear surface of the bottom plate 14a of the chassis 14 (the surface away from the cold cathode tubes 18) at the ends of the long dimension of the bottom plate 14a in pairs. They cover the areas of the bottom plate 14a in which the relay connectors 21 are arranged.

Specifically, as illustrated in FIG. 17, each cover 60 has a rectangular plan-view shape. The covers 60 are arranged along the Y-axis direction and parallel to each other. The long-side direction thereof is aligned with the short-side direction of the bottom plate 14a. The covers 60 are fixed to the respective ends of the long dimension of the bottom plate 14a with screws. The long dimension of each cover 60 is about a half of the short dimension of the chassis 14 or the long dimension of the inverter board 20. The cover 60 has a plate-like shape and the board surface thereof is parallel to the bottom plate 14a of the chassis 14 and the board surface of the inverter board 20. A part of each cover 60 relatively close to the relay connectors 21 (or the end of the chassis 14) is a front portion 60a, and a part of each cover 60 relatively away from the relay connectors 21 (or close to the middle of the chassis 14) is a rear portion 60b. The rear portion 60b has heat dissipation holes 60c that are through holes for dissipating heat and arranged in a matrix. Furthermore, each cover 60 has a guide hole 61 that is a through hole in which the guide boss 30 can move along the connecting direction of the inverter board 20 (the X-axis direction). The guide hole 61 has an elongated rectangular shape and extends from the front portion 60a of the cover 60 to the rear portion 60b thereof.

When the inverter board is at the non-connected position, the inverter board 20 faces the corresponding cover 60. Four guide bosses 30 project from the respective corners of the inverter board 20. The guide bosses 30 are passed through the respective guide holes 61 of the covers 60 and in contact with the rear surface of the bottom plate 14a of the chassis 14. When the inverter board 20 is moved from the non-connected position to the connected position along the rear surface of the chassis 14, the guide bosses 30 slide over the bottom plate 14a of the chassis 14 along the guide holes 61. With the guide bossed 30, a predetermined distance between the inverter board 20 and the chassis 14 is maintained.

According to this embodiment, as described above, the covers 60 having insulation properties are arranged between the chassis 14 and the respective inverter boards 20. Therefore, unexpected free-discharges from the inverter boards 20 are less likely to occur. Furthermore, the guide bosses 30 on the inverter boards 20 are passed through the respective guide holes 61 of the covers 60 and in contact with the chassis 14. Therefore, the inverter boards 20 are less likely to in contact with the chassis 14. This reduces damages to the inverter bards 20 and the chassis 14.

### <Other embodiment>

The present invention is not limited to the above embodiments explained in the above description. The following embodiments may be included in the technical scope of the present invention, for example.

(1) In the above embodiments, each guide boss includes the ball attached to the top of the tubular portion such that it can roll. However, each guide boss may not include the ball. In this case, the top of the tubular portion slides over the chassis during the movement of the inverter board from the non-connected position to the connected position. As a result, the proximity of the inverter board to the chassis is restricted.

(2) In the above embodiments, the guide bosses are arranged at the corners of each inverter board or at three positions so as to form a triangle. However, the number and positions of the guide bossed are not limited to those in the above embodiment.

(3) The configurations of the above embodiment including kinds of components mounted on the inverter boards can be altered accordingly.

(4) In the above embodiments, a pair of the inverter boards corresponding the electrodes at the ends of the cold cathode tubes is provided. However, one of the inverter boards may not be provided and the cold cathode tubes may be driven by a single end drive system. In such a case, the relay connectors arranged on a side where the inverter board is not provided (on a low voltage side) may be connected to a ground circuit.

(5) In the above embodiments, each cold cathode tube includes the outer lead extending from the ends of the glass tube, and the outer leads are connected to the connectors. However, ferrules connected to the outer leads may be fitted onto the glass tube, and the ferrules may be connected to the connectors.

(6) In the above embodiments, the cold cathode tubes that are one kind of fluorescent tubes are used as light sources. However, other types of fluorescent tubes including hot cathode tubes can be used. Furthermore, discharge tubes (e.g., mercury lamps) other than the fluorescent tubes can be used.

### EXPLANATION OF SYMBOLS

- 10:: Liquid crystal display device (Display device)
- 11:: Liquid crystal panel (Display panel)
- 12:: Backlight unit (Lighting device)
- 14:: Chassis
- 18:: Cold cathode tube (Light source)
- 20:: Inverter board (Power supply board)
- 21:: Relay connector
- 30:: Guide boss (Proximity restriction boss)
- 32:: Ball (Spherical member)
- 60:: Cover
- TV:: Television receiver

## Claims

1. A lighting device comprising:
a light source;
a chassis housing the light source;
a power supply board arranged on a chassis side opposite from the light source and configured to supply drive power to the light source;
at least one relay connector mounted to the chassis such that the power supply board is connected thereto so as to be movable between a non-connected position at which the power supply board is disconnected from the relay connector and a connected position at which the power supply board is connected to the relay connector along a surface of the chassis, the relay connector being configured to relay power supply from the power supply board to the light source; and
at least one proximity restriction boss projecting from the power supply board so as to be in contact with the chassis with the power supply board being at at least one of the non-connected position and the connected position, the at least one proximity restriction boss being configured to restrict proximity of the power supply board to the chassis.

2. The lighting device according to claim 1, wherein the proximity restriction boss includes a spherical member attached to a top thereof close to the chassis, the spherical member being configured to roll.

3. The lighting device according to any one of claims 1 and 2, wherein the at least one proximity restriction boss includes at least three proximity restriction bosses projecting from the power supply board.

4. The lighting device according to any one of claims 1 to 3, wherein:
the power supply board has a rectangular plan-view shape; and
the at least one proximity restriction boss includes four proximity restriction bosses projecting from respective corners of the power supply board.

5. The lighting device according to any one of claims 1 to 4, wherein the proximity restriction boss can be used for releasing electrical discharge from an electrode supply board.

6. The lighting device according to any one of claims 1 to 5, wherein the chassis faces the power supply board without another member therebetween.

7. The lighting device according to any one of claims 1 to 5, further comprising a cover having an insulation property between the chassis and the power supply board.

8. A display device, comprising:
the lighting device according to any one of claims 1 to 7; and
a display panel arranged configured to provide display using light from the lighting device.

9. The display device according to claim 8, wherein the display panel is a liquid crystal panel including liquid crystals sealed between substrates.

10. A television receiver comprising the display device according to any one of claims 8 and 9.
